(19) Europäisches Patentamt
European Patent Office
Office européen des brevets

(11) Veröffentlichungsnummer: 0 380 972
A2

(12) EUROPÄISCHE PATENTANMELDUNG

(21) Anmeldenummer: 90100991.0

(51) Int. Cl.5: C08G 77/385, D06M 15/657

(22) Anmeldetag: 18.01.90

(30) Priorität: 02.02.89 DE 3903005

(43) Veröffentlichungstag der Anmeldung:
08.08.90 Patentblatt 90/32

(84) Benannte Vertragsstaaten:
BE CH DE ES FR GB IT LI NL SE

(71) Anmelder: Chemische Fabrik Pfersee GmbH
Färberstrasse 4
D-8900 Augsburg(DE)

(72) Erfinder: Mosch, Franz
Lettenbachstrasse 31
D-8901 Diedorf(DE)

(54) **Verfahren zur Herstellung von modifizierten Polysiloxanen, die so hergestellten Polysiloxane, deren Verwendung und die so behandelten Materialien.**

(57) Der vorliegende Gegenstand betrifft ein Verfahren zur Herstellung von modifizierten Polysiloxanen durch Umsetzung von Polyvinylsiloxan n mit Verbindungen der Formel

$$HS-\overset{R}{\overset{|}{C}}H-\overset{R}{\overset{|}{C}}H-R_f$$

in der R = H, CH3 oder CH2H5, wobei mindestens 1 Rest R = H ist, und $R_f$ einen Perfluoralkylrest mit 8 bis 16 C-Atomen bedeutet, in etwa äquivalenten Mengen, bezogen auf Vinylgruppen, bei erhöhter Temperatur. Daneben werden die auf diese Weise hergestellten Polysiloxane unter Schutz gestellt.

Außerdem wird die Verwendung dieser Polysiloxane zur öl-und wasserabweisenden Behandlung von Fasermaterialien beansprucht.

Dabei gelingt es bei Einsatz geringer Fluormengen sehr gute, wasch- und reinigungsbeständige Öl- und Wasserabweisung zu erzielen.

EP 0 380 972 A2

# Verfahren zur Herstellung von modifizierten Polysiloxanen, die so hergestellten Polysiloxane, deren Verwendung und die so behandelten Materialien

Die vorliegende Erfindung beinhaltet ein Verfahren zur Herstellung von modifizierten Polysiloxanen durch Umsetzung von Polyvinylsiloxanen mit ausgewählten Perfluoralkylgruppen enthaltenden Verbindungen, die so hergestellten Polysiloxane, deren Verwendung und die so behandelten Materialien.

Aus der US-A 4.633.004 sind Fluorsilane bekannt, die durch Addition von Silanthiolen an fluorierte Olefine bereitet werden. Diese Verbindungen sind zur Herstellung von fluorierten, elastomeren Silikonen geeignet. Die Anwendung derartiger Produkte für die Textilveredlung wird in diesem Stand der Technik nicht erwähnt.

Aus der DE-A 2 409 383 sind niedrige Perfluoralkylgruppen (mit 1 bis 4 C-Atomen) tragende Siloxane bekannt. Diese Siloxane werden u.a. zur wasser- und ölabweisenden Ausrüstung von Textilien empfohlen. Versuche haben aber gezeigt, daß die dabei erhaltenen öl- und wasserabweisenden Effekte den heutigen Anforderungen in keiner Weise mehr gerecht werden.

Die Aufgabe der vorliegenden Erfindung war es nun, ein Verfahren zur Herstellung von modifizierten Polysiloxanen zu entwickeln, die bei der Anwendung wasch- und reinigungsbeständige öl- und wasserabweisende Effekte auf den damit behandelten Fasermaterialien gewährleisten. Die Lösung dieser Aufgabe gelang überraschenderweise durch die Umsetzung von Polyvinylsiloxanen mit Verbindungen der Formel (1)

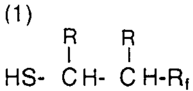 (1)

in der R = H, CH3 oder C2H5, wobei mindestens ein Rest R = H ist, und $R_f$ einen Perfluoralkylrest mit 8 bis 16 C-Atomen bedeuten, in etwa äquivalenten Mengen, bezogen auf Vinylgruppen, bei erhöhter Temperatur.

In den weiteren Ansprüchen werden bevorzugte Maßnahmen des erfindungsgemäßen Verfahrens, die so hergestellten Polysiloxane sowie die Verwendung der auf diese Weise hergestellten Polysiloxane zur Behandlung von Fasermaterialien beansprucht und die so behandelten Fasermaterialien unter Schutz gestellt.

Als Ausgangssubstanzen für das erfindungsgemäße Verfahren dienen Polyvinylsiloxane und Perfluoralkylgruppen ent haltende Thiole der Formel (1).

Die Polyvinylsiloxane sind bekannt und werden durch Hydrolyse von Alkylvinyldichlorsilanen in üblicher Weise hergestellt. Dabei ist darauf zu achten, daß eine Cohydrolyse mit anderen Silanen, z.B. Dimethyldichlorsilan, unterbleibt. Aus wirtschaftlichen Gründen wird zur Herstellung der Polyvinylsiloxane bevorzugt Methylvinyldichlorsilan eingesetzt. Bei der Hydrolyse dieser Silane entstehen Polyvinylsiloxane, die zu mehr als 50 %, insbesondere 70 bis 90 %, aus kettenförmigen Polyvinylsiloxanen bestehen. So entstehen beispielsweise bei der Hydrolyse von Vinylmethyldichlorsilan Siloxane der Formel (2)

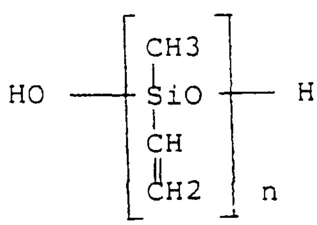 (2)

in der n eine ganze Zahl von 10 bis 100, insbesondere 30 bis 50 bedeutet.

Daneben entstehen bei der üblichen Hydrolyse ringförmige, also cyclische Polyvinylsiloxane, z.B. solche der Formel

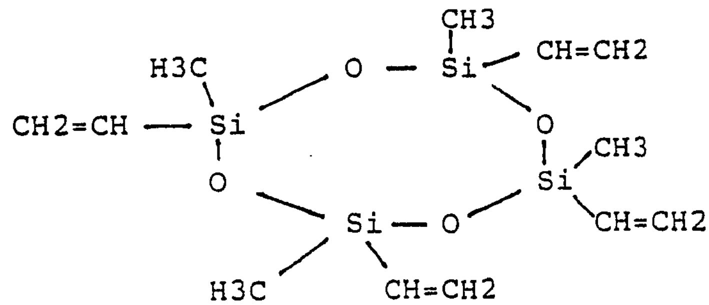

Es ist bei der Hydrolyse darauf zu achten, daß der Anteil der cyclischen Polyvinylsiloxane so niedrig wie möglich gehalten wird, da die erfindungsgemäß mit diesen cyclischen Polyvinylsiloxanen hergestellten modifizierten Polysiloxane bei der Anwendung schlechtere Effekte liefern. Gegebenenfalls ist es angebracht, den Anteil der geradkettigen Polyvinylsiloxane durch bekannte physikalische Methoden zu erhöhen, so daß derselbe wenigstens über 70 % liegt.

In den verwendeten Polyvinylsiloxanen trägt also jedes Si-Atom eine Vinylgruppe, d.h. nur bei Einsatz derartiger Ausgangsverbindungen sind bei der Verwendung der modifizierten Polysiloxane die geforderten Effekte gewährleistet. Die weiteren Liganden sind von untergeordneter Bedeutung, doch werden - wie oben bereits ausgeführt - aus wirtschaftlichen Überlegungen heraus die entsprechenden Methylverbindungen bevorzugt eingesetzt.

Als weitere Ausgangsverbindungen werden solche der Formel (1)

$$HS-\underset{|}{\overset{R}{C}}H-\overset{R}{\underset{|}{C}}H-R_f \quad (1)$$

verwendet, in der R = H, CH3, CH2H5, wobei mindestens ein Rest R = H ist, und $R_f$ einen Perfluoralkylrest mit 8 bis 16 C-Atomen bedeuten. Besonders geeignet sind solche Verbindungen der Formel (1), in denen beide Reste R = H und $R_f$ einen Perfluoralkylrest mit 10 bis 12 C-Atomen darstellen. Diese Verbindungen sind ebenso wie die oben beschriebenen Polyvinylsiloxane hinreichend bekannt. Die Polyvinylsiloxane werden zur Modifizierung mit den Verbindungen der Formel (1) im allgemeinen mit etwa äquivalenten Mengen, bezogen auf Vinylgruppen, umgesetzt, wobei geringe Überschüsse des einen oder anderen Reaktionspartners durchaus möglich sind. Vor allem ist darauf zu achten, daß der Überschuß an Polyvinylsiloxanen, bezogen auf Vinylgruppen, - und diese Arbeitsweise ist bevorzugt - bestimmte Werte nicht überschreitet, da sich sonst bei der Verwendung der modifizierten Polysiloxane die Effekte wiederum deutlich verschlechtern. Besonders bevorzugt wird erfindungsgemäß mit einem 5- bis 10 %igen Überschuß gearbeitet. Es ist aber ohne weiteres auch möglich - ohne nennenswerte Effektverschlechterung - die Umsetzung mit einem Überschuß bis zu höchstens 30 % durchzuführen. Nicht mehr brauchbare, weil schon deutlich effektschwächere Umsetzungsprodukte werden erhalten, wenn der Überschuß an Polyvinylsiloxanen, bezogen auf Vinylgruppen, weiter ansteigt. Überschüsse von über 30 % sind daher unbedingt zu vermeiden, da dann die Wasserabweisung bei Fasermaterialien, die mit den erfindungsgemäß hergestellten Polysiloxanen behandelt wurden, unbefriedigend ist und die Ölabweisung teilweise sogar schon ganz verloren geht. Die Verbindungen der Formel (1) werden üblicherweise aus ökologischen und wirtschaftlichen Gründen nicht im Überschuß eingesetzt, doch sind um bis zu 10 % erhöhte Mengen durchaus vertretbar.

Die Herstellung der modifizierten Polysiloxane aus den Polyvinylsiloxanen und den Verbindungen der Formel (1) gelingt in einfacher Weise dadurch, daß die beiden Verbindungen in den angegebenen Mengen in Substanz, vorzugsweise in Gegenwart eines organischen Lösungsmittels, insbesondere Benzotrifluorid, Xylolhexafluorid bzw. Mischungen dieser Lösungsmittel mit Ketonen, z.B. Methylisobutylketon oder Methylethylketon bzw. mit Benzinfraktionen, z.B. n-Heptan, vorzugsweise bei Temperaturen von etwa 40 bis 120 °C, besonders bevorzugt 60 bis 100 °C, insbesondere in Inertgasatmosphäre, miteinander umgesetzt werden. Üblicherweise wird die Reaktion in Gegenwart von Katalysa toren, nämlich Radikalbildnern, z.B. Azoisobuttersäuredinitril und ähnlichen Verbindungen, durchgeführt. Abgeschlossen wird die Umsetzung durch Nachreaktion unter weiterer Katalysatorzugabe. Die übliche Reaktionszeit beträgt etwa 1 1/2 bis 3 Stunden mit einer Nachreaktionszeit von etwa 1 bis 4 Stunden. Bei der bevorzugten Arbeitsweise ist die Umsetzung dann beendet, wenn der Nachweis von freier Verbindung (1) negativ verläuft.

Die erfindungsgemäß hergestellten modifizierten Polysiloxane können direkt, d.h. in Form von Lösungen, zur Behandlung von Fasermaterialien verwendet werden. Bevorzugt ist es aber - vor allem aus ökologischen Gründen - dieselben in lösungsmittelfreie, wäßrige Dispersionen zu überführen und in dieser

Form einzusetzen.

Die Herstellung von wäßrigen Dispersionen aus den wie beschrieben hergestellten Produkten erfolgt in bekannter Weise und der Fachmann wird keine Schwierigkeiten haben, hier die richtigen Emulgatoren und die richtige Verfahrensweise zu wählen. Der Vollständigkeit halber seien aber einige Emulgatoren und auch eine Standardmethode zur Herstellung der Dispersionen allgemein erläutert. Als Emulgatoren kommen - bedingt durch die weitere Verwendung der Dispersionen - besonders schwach kationische und nichtionische Emulgatoren in Betracht, die in Mengen von 3 bis 50 %, insbesondere 8 bis 40 %, bezogen auf Feststoff, eingesetzt werden.

Als Beispiele für Emulgatoren sind Ethylenoxidaddukte von Fettalkoholen, insbesondere solche von primären und/oder sekundären, linearen oder verzweigten Alkoholen mit 8 bis 16 C-Atomen und ethoxylierte C6- bis C12-Alkylphenole, wobei die Anzahl der Ethylenoxideinheiten zwischen 5 und 30 liegt, geeignet. Daneben sind in gleicher Weise auch stickstoffhaltige Emulgatoren, wie sie durch Ethoxilierung von Fettaminen oder Fettsäureamiden entstehen, geeignet, wobei diese Verbindungen durch Zugabe von Sauren auch in Salzform vorliegen können. Beispiele sind 2,6,8-Trimethyl-4-nonyloxihexaethylenoxiethanol, Isotridecylethoxilat mit durchschnittlich 8 Ethylenoxideinheiten und Hexadecylamin, ethoxiliert mit durchschnittlich 15 Mol Ethylenoxid, auch in Form des Acetats.

Zur Herstellung der wäßrigen Dispersionen werden beispielsweise das Wasser und der Emulgator gemischt, auf höhere Temperatur erwärmt und das auf ebenfalls erhöhte Temperatur erwärmte erfindungsgemäß hergestellte Polysiloxan, gegebenenfalls von der Herstellung her in Form einer Lösung, einturbiniert. Danach wird die entstandene Vordispersion auf einer Hochdruckhomogenisiervorrichtung bei erhöhtem Druck und mäßig erhöhter Temperatur homogenisiert. Abschließend wird von der Herstellung noch vorhandenes Lösungsmittel gegebenenfalls unter vermindertem Druck abgezogen. Die erhaltenen Dispersionen weisen etwa 10 bis 40 Gew.% an Wirksubstanz auf.

Die so erhaltenen wäßrigen Dispersionen sind ebenso wie die organischen Lösungen der beschriebenen modifizierten Polysiloxane nach Verdünnung in hervorragender Weise zur öl- und wasserabweisenden Behandlung, insbesondere Ausrüstung (sofern andere Behandlungsmethoden, z.B. im Rahmen der Beschichtung in Betracht kommen, wird der Fachmann keine Mühe haben, entsprechend dem erfindungsgemäßen Verfahren vorzugehen) von Fasermaterialien, insbesondere Textilien, geeignet. Die verwendeten Mengen werden dabei unter Berücksichtigung einer üblichen Feststoffauflage so gewählt, daß die Ausrüstungsbäder etwa 1,5 bis 4,5 g/l Fluor enthalten, was üblicherweise einer Einsatzmenge 10 bis 100 g/l Flotte der wie beschrieben hergestellten Dispersionen entspricht. Die Ausrüstung selbst erfolgt in bekannter Art und Weise, vornehmlich durch Foulardieren, Trocknen und Kondensieren, wobei aber auch Sprühen besonders geeignet ist.

Es ist selbstverständlich, daß dem Ausrüstungsbad im Rahmen der vorliegenden Arbeitsweise weitere, in der Textilindustrie übliche Hilfsmittel zugefügt werden können. Besonders hervorzuheben seien in diesem Zusammenhang Cellulosevernetzer, da hierbei nicht nur die gewünschte Knitterfestigkeit, sondern zusätzlich auch eine gewisse Stabilisierung der Effekte erzielt wird. Daneben sind aber auch Füllharze, Flammschutzmittel, Schiebefestmittel und ähnliche Produkte sowie gegebenenfalls die außerdem notwendigen Katalysatoren, alle in üblichen Mengen, als Zusatzprodukte zu nennen.

Bei der Verwendung der erfindungsgemäß hergestellten Polysiloxane können ebenso wie nach bekannten derartigen Ausrüstungsverfahren Fasermaterialien aller Art herangezogen werden. Als Fasermaterialien sind dabei insbesondere Textilien zu nennen, wobei beispielsweise solche in Frage kommen, die aus Cellulosefasern bestehen oder zumindest teilweise Cellulosefasern enthalten. Als zusätzliche Fasern neben der Cellulose kommen dabei sowohl synthetische Fasern, wie Polyester-, Polyamid- oder Polyacrylnitrilfasern, als auch Wolle in Betracht. Selbstverständlich kann das erfindungsgemäße Verfahren auch zur Ausrüstung von reinen Synthesefaser- und Wollfasermaterialien herangezogen werden. In allen Fällen hat sich das erfindungsgemäße Verfahren trotz nur geringer Fluorauflagen in hervorragender Weise bewährt.

Nach dem erfindungsgemäßen Verfahren gelingt es in einfacher Art und Weise, modifizierte Polysiloxane herzustellen, die bei der Anwendung sehr gute, wasch- und reinigungsbeständige Öl- und Wasserabweisung auf den damit behandelten Fasermaterialien liefern, wobei auch ein durchaus angenehmer Griff resultiert. Es konnte bei Kenntnis des aufgezeigten Standes der Technik nicht erwartet werden, daß die Verbindungen der Formel (1) ohne weiteres an die Polyvinylsiloxane addiert werden können, ohne daß die Vinylgruppen, vor allem auch aufgrund der vorzugsweise gleichzeitig vorhandenen Radikalbildner, miteinander reagieren und dadurch die angestrebte Reaktion weitgehend unterbunden wird.

Daneben konnte nicht erwartet werden, daß es bei Einsatz der vorliegenden, erfindungsgemäß hergestellten Umsetzungsprodukte im Rahmen der üblichen Arbeitsweise gelingt, derartige überragende Gesamteffekte zu erzielen. Es ist überraschend, daß diese Gesamteffekte trotz der doch relativ geringen Fluorauflagen erreicht werden können. Es muß also festgehalten werden, daß erfindungsgemäß modifizierte Polysiloxane bereitgestellt werden, die bei Anwendung einen einfachen, zuverlässigen Weg zur Erzielung der genannten sehr guten Effekte ermöglichen, ohne daß es notwendig ist, durch Kombination mit anderen Fluorprodukten eventuell vorhandene Nachteile derselben auszugleichen.

In den nachfolgenden Beispielen wird das erfindungsgemäße Verfahren und die Anwendung der dabei hergestellten modifizierten Polysiloxane näher beschrieben, wobei Prozentangaben gleich Gewichtsprozent sind.

Beispiel 1

Produkt A 1)

In einem 2 l-Vierhalskolben mit 2-Halsaufsatz, gut wirksamem Rückflußkühler, Stickstoffeinleitungsrohr, Rührer mit Teflondichtung, Innenthermometer und graduiertem Zulaufgefäß werden unter Stickstoffspülung 610 g eines $R_f$-Thiolgemisches (CnF2n+1CH2CH2SH mit 7 % C8F17; 64,8 % C10F21; 20,5 % C12F25; 5,9 % C14F29; Rest C16F33; mittleres Molekulargewicht 610), 1,05 Mol (90 g des Hydrolysats von Methylvinyldichlorsilan mit 75 % linearen Anteilen mit ca. 40 Si-Bausteinen und 25 % cyclischen Anteilen) und 250 g m-Xylolhexafluorid zusammen eingewogen und auf 85° C im Ölbad erwärmt. Es resultiert eine leicht trübe, nicht ganz homogene Mischung. Danach werden 6,1 g $\alpha,\alpha'$-Azoisobutyronitril in Methylethylketon zu 60 ml gelöst, in die Tropfbürette eingefüllt und alle 10 Minuten 6 ml der Katalysatorlösung zu der Reaktionsmischung dosiert. Bei der ersten Zugabe tritt eine exotherme Reaktion unter Temperaturanstieg auf 100 bis 105° C ein. Dabei entsteht sofort eine klare, homogene Lösung. Nach Ende der Katalysatorzugabe läßt man zur Vollendung der Additionsreaktion noch 2 Stunden bei 83 bis 87° C nachrühren. Danach wird mit m-Xylolhexafluorid die Konzentration der Reaktionslösung auf 50 % eingestellt, d.h. es wird Lösungsmittel bis zu einem Endgewicht von 1400 g zugegeben.

Zur Dispergierung werden 10 g Emulgator (Dodecyloxipropylamin ethoxiliert mit durchschnittlich 12 Mol Ethylenoxid, in Form des Acetats) in 280 g heißem Wasser bei 70° C gelöst und mit Hilfe eines Hochgeschwindigkeitsrührers 200 g der obigen, auf 70° C erwärmten Reaktionsmischung einturbiniert und ca. 1 Minute gerührt. Diese Voremulsion wird auf einer Hochdruckhomogenisiermaschine, die mit Dampf vorgewärmt wurde, bei ca. 300 bar und 60° C homogenisiert (4 Passagen).

Zur Entfernung des Lösungsmittels wird die Dispersion anschließend in einen 1 l-Dreihalskolben mit Rührwerk und absteigendem Kühler überführt und mit Hilfe eines ca. 130° C heißen Ölbades das Lösungsmittel (m-Xylolhexafluorid und Methylethylketon) aceotrop ohne Vakuum abdestilliert.
Nach Beendigung der Lösemitteldestillation wird die Dispersion filtriert und durch Zugabe von Wasser auf einen Fluorgehalt von 11,3 % in der Dispersion eingestellt.

Produkt B 1)

Wie Produkt A 1), aber unter Verwendung von 1 Mol eines reinen C10F21CH2CH2SH als Verbindung der Formel (1) anstelle des $R_f$-Thiolgemisches (fluorgleich eingestellt).

Produkt C 1)

Wie Produkt A 1), aber zum Vergleich wird die Umsetzung mit einem Mol eines $R_f$-Thiols der Formel C4F9CH2CH2SH vorgenommen (fluorgleich eingestellt).

Produkt D 1)

Wie Produkt A 1), aber zum Vergleich wird die Umsetzung mit cyclischem Vinylsiloxan vorgenommen.

Ausrüstung

Zur Ausrüstung wird ein dunkelblauer Baumwollbatist (ca. 90 g/m² mit einer Flotte, die neben 30 g/l der

Produkte A 1) bis D 1) (Fluorgehalt der Flotten 3,4 g/l), 10 g/l eines 75 %igen, wäßrigen Cellulosevernetzers (Dimethyloldihydroxiethylenharnstoff und mit Methanol verethertes Pentamethylolmelamin im Verhältnis 9 : 2), 20 g/l eines ca. 70 %igen mit Methanol veretherten Dimethyloldihydroxi ethylenharnstoffs (mit geringen Anteilen an Neutralsalz), 6 g/l Extender (25 %ige, lösungsmittelfreie, nichtionogene Dispersion des Produktes nach Beispiel 1 a) der EP-B 196.309), 9 g/l Magnesiumchloridhexahydrat und 2 ml/l 60 %ige Essigsäure enthält, foulardiert (Flottenaufnahme ca. 85 %), bei 110 °C während 10 Minuten getrocknet und 150 °C während 5 Minuten kondensiert.

Die Ergebnisse der Ausrüstungen sind in der nachfolgenden Tabelle zusammengestellt, wobei es sich bei den Wäschen um übliche 60 °C-Haushaltsmaschinenwäschen und bei den Chemisch-Reinigungen um solche in Gegenwart von 0,5 g/l eines üblichen Reinigungsverstärkers und 0,1 g/l Wasser (Flottenverhältnis 1 : 10) handelt. Die Messungen wurden nach 12-stündigem Ausliegen im Normalklima vorgenommen. Die Ölabweisung wurde dabei nach AATCC 118-1972 und die Wasserabweisung nach DIN 53888 (a = Wasseraufnahme in %; b = Abperleffekt) durchgeführt.

| Flotte | Originalwerte | | | nach 1xChemisch-Reinigung | | | nach 5x60 °C Maschinenwäsche | | |
|---|---|---|---|---|---|---|---|---|---|
| | Öl-/Wasserabw. | | | Öl-/Wasserabw. | | | Öl-/Wasserabw. | | |
| | | a | b | | a | b | | a | b |
| mit Produkt A1) (erfindungsgemäß) | 6 | 5,1 | 5<br>5<br>5 | 5 | 6,5 | 5<br>5<br>5 | 5 | 7 | 5<br>5<br>5 |
| mit Produkt B1) (erfindungsgemäß) | 6 | 4,5 | 5<br>5<br>5 | 5 | 5,5 | 5<br>5<br>5 | 5-6 | 6 | 5<br>5<br>5 |
| mit Produkt C1) (Vergleich) | 0 | 39,2 | 2<br>1<br>1 | 0 | 58 | 1 | 0 | 59 | 1 |
| mit Produkt D1) (Vergleich) | 5 | 42,0 | 1 | 0 | - | - | 0 | - | - |
| unbehandelt | 0 | 62 % | | - | - | - | - | - | - |

Das erfindungsgemäße Verfahren unter Einsatz der Produkte A 1) und B 1) liefert hervorragende Werte. Und selbst dann, wenn die Einsatzmengen an Fluorprodukt halbiert werden, werden die öl- und wasserabweisenden Effekte und deren Wasch- und Reinigungsbeständigkeit den gestellten Anforderungen ohne weiteres gerecht. So zeigt eine Ausrüstung mit 15 g/l Produkt B 1) bei sonst gleicher Flottenzusammensetzung den Ölabweisungswert 5, ein Wert, der auch beim Waschen und Reinigen keinen Abfall aufweist. Auch die Wasserabweisung ist mit einem Anfangswert von 5/5/5 und 6,4 % Wasseraufnahme bei nur geringem Abfall nach der Reinigung und den Wäschen in vollem Umfang zufriedenstellend.

Beispiel 2

Die Ausrüstung im Beispiel 1 wird wiederholt, wobei anstel le der dort genannten Produkte fluorgleich (1,8 g Fluor/l) die folgenden Produkte in den ebenfalls angegebenen Mengen eingesetzt werden:

A 2 a) 30 g/l Produkt entsprechend dem im Beispiel 1 unter A 1) genannten Produkt, eingestellt auf einen Fluorgehalt von 6 %.

A 2 b) Wie A 2 a) mit 25 % (= 1,25 Mol) Überschuß an Vinylsiloxan.

B 2) 13,3 g/l SCOTCHGARD FC 251 (3M Company).

C 2) 33,3 g/l Asahi Guard AG 710 (Asahi Glass).

D 2) Wie A 2 a) mit 50 % (= 1,5 Mol) Überschuß an Vinylsiloxan.

Die Überprüfung der Ausrüstungen erfolgt entsprechend den Angaben im Beispiel 1 und ergibt folgendes Bild:

| Flotte | Originalwerte | | | nach 1xChemisch-Reinigung | | | nach 5x60° C-Maschinenwäsche | | |
|---|---|---|---|---|---|---|---|---|---|
| | Öl-/Wasserabw. | | | Öl-/Wasserabw. | | | Öl-/Wasserabw. | | |
| | | a | b | | a | b | | a | b |
| mit Produkt A 2a) (erfindungsgemäß) | 6 | 5 | 5<br>5<br>5 | 5 | 6 | 5<br>5<br>5 | 4 | 6 | 5<br>5<br>5 |
| mit Produkt A 2b) (erfindungsgemäß) | 5 | 7 | 5<br>5<br>5 | 4-5 | 11 | 5<br>5<br>5 | 4 | 9 | 5<br>5<br>4 |
| mit Produkt B 2) (Stand der Technik) | 5 | 13 | 5<br>5<br>5 | 3 | 21 | 5<br>4<br>3 | 4 | 12 | 5<br>4<br>4 |
| mit Produkt C 2) (Stand der Technik) | 5 | 12 | 5<br>5<br>4 | 4-5 | 14 | 5<br>4<br>4 | 4 | 12 | 4<br>3<br>3 |
| mit Produkt D 2) (Vergleich) | 5 | 8 | 5<br>5<br>5 | 2 | 19 | 4<br>3<br>3 | 1 | 20 | 4<br>4<br>3 |

Aus den Angaben wird die Überlegenheit der erfindungsgemäßen Ausrüstungen A 2 a) und A 2 b) deutlich.

Beispiel 3

Es wird ein Produkt entsprechend Beispiel 1, Produkt B 1) hergestellt, wobei aber als Verbindung der Formel (1)
A 3) 1 Mol C8F17CH2CH2SH und
B 3) 1 Mol C10F21CH(CH3)CH2SH
anstelle des $R_f$-Thiolgemisches eingesetzt werden.

Mit den Produkten A 3) (Fluorgehalt 17 %) und B 3) (Fluorgehalt 17,3 %) wird ein blauer Polyester/Baumwollmantelpopeline 67/33 (ca. 210 g/m$^2$) mit wäßrigen Flotten, die neben den in Beispiel 1 genannten Ausrüstungsmitteln und den Produkten A 3) und B 3) (Menge entsprechend 2,26 g/l Fluor) noch 20 g/l einer handelsüblichen, nicht-ionogenen, feinteiligen, wäßrigen, 20 %igen Polyethylenwachsdispersion (50 % Nonylphenol ethoxiliert mit 15 Mol Ethylenoxid, bezogen auf Polyethylenwachs, als Emulgator; Polyethylenwachs mit einer Dichte von ca. 1 g/cm$^3$ bei 20° C, Säurezahl 13, Verseifungszahl ca. 22) enthalten, ausgerüstet (Flottenaufnahme 63 %) und in üblicher Weise fertiggestellt, so erhält man eine wasch- und reinigungsbeständige Öl- und Wasserabweisung, wobei das behandelte Gewebe zusätzlich noch durch einen angenehmen, weichen Griff charakterisiert ist.

**Ansprüche**

1. Verfahren zur Herstellung von modifizierten Polysiloxanen, dadurch gekennzeichnet, daß Polyvinylsiloxane mit Verbindungen der Formel (1)

$HS-\overset{R}{C}H-\overset{R}{C}H-R_f,$ (1)

in der R = H, CH3 oder C2H5, wobei mindestens ein Rest R = H ist, und $R_f$ einen Perfluoralkylrest mit 8 bis 16 C-Atomen bedeuten, in etwa äquivalenten Mengen, bezogen auf Vinylgruppen, bei erhöhter Temperatur umgesetzt werden.

2. Verfahren nach Patentanspruch 1, dadurch gekennzeichnet, daß zur Umsetzung überwiegend lineare Polyvinylsiloxane eingesetzt werden.

3. Verfahren nach den Patentansprüchen 1 oder 2, dadurch gekennzeichnet, daß zur Umsetzung überwiegend lineare Polyvinylsiloxane der Formel (2)

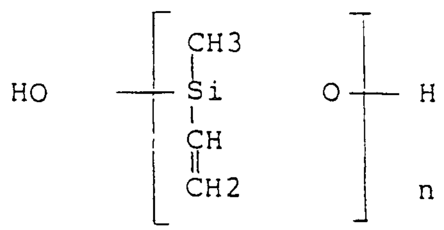

(2)

in der n eine ganze Zahl von 10 bis 100, insbesondere 30 bis 50 bedeutet, eingesetzt werden.

4. Verfahren nach einem oder mehreren der Patentansprüche 1 bis 3, dadurch gekennzeichnet, daß die Umsetzung in Gegenwart von organischen Lösungsmitteln und/ oder in Inertgasatmosphäre bei 40 bis 120 °C in Gegenwart von Radi kalbildnern erfolgt.

5. Verfahren nach einem oder mehreren der Patentansprüche 1 bis 4, dadurch gekennzeichnet, daß die Umsetzung mit einem Überschuß an Polyvinylsiloxan, bezogen auf Vinylgruppen, von höchstens 30 %, insbesondere höchstens 10 %, vorgenommen wird.

6. Verfahren nach einem oder mehreren der Patentansprüche 1 bis 5, dadurch gekennzeichnet, daß zur Umsetzung solche Verbindungen der Formel (1), in denen $R_f$ einen Perfluoralkylrest mit 10 bis 12 C-Atomen bedeutet, eingesetzt werden.

7. Verfahren nach einem oder mehreren der Patentansprüche 1 bis 6, dadurch gekennzeichnet, daß zur Umsetzung solche Verbindungen der Formel (1), in denen beide R = H sind, eingesetzt werden.

8. Die nach einem oder mehreren der Patentansprüche 1 bis 7 hergestellten modifizierten Polysiloxane.

9. Verwendung der nach einem oder mehreren der Patentansprüche 1 bis 7 hergestellten modifizierten Polysiloxane zur öl- und wasserabweisenden Behandlung von Fasermaterialien, insbesondere Textilien, in organischer Lösung bzw. in wäßrigem Medium zusammen mit bekannten Mitteln in üblicher Weise.

10. Verwendung nach Patentanspruch 9, dadurch gekennzeichnet, daß Textilien in wäßrigem Ausrüstungsbad behandelt, insbesondere foulardiert bzw. gesprüht, und in üblicher Weise fertiggestellt werden.

11. Fasermaterialien behandelt nach den Patentansprüchen 9 oder 10.